# EUROPEAN PATENT SPECIFICATION

(11) **EP 3 110 206 B1**
(45) Date of publication and mention of the grant of the patent: **11.08.2021**
(21) Application number: 14895807.7
(22) Date of filing: 25.06.2014
(51) Int. Cl.: H04W 48/16, H04W 88/06

(54) **DATA PROCESSING METHOD AND DEVICE FOR USER EQUIPMENT**
DATENVERARBEITUNGSVERFAHREN UND VORRICHTUNG FÜR BENUTZERGERÄT
PROCÉDÉ ET DISPOSITIF DE TRAITEMENT DE DONNÉES DESTINÉS À UN ÉQUIPEMENT UTILISATEUR

(43) Date of publication of application: 28.12.2016
(73) Proprietor: Honor Device Co., Ltd., Shenzhen, Guangdong 518040 (CN)
(72) Inventor: SHEN, Li, Shenzhen Guangdong 518129 (CN)
(74) Representative: Gill Jennings & Every LLP
(86) International application number: PCT/CN2014/080734
(87) International publication number: WO 2015/196389

(56) References cited:
- EP-A1- 2 146 541
- WO-A1-2012/140475
- WO-A1-2014/071774
- CN-A- 103 067 595
- CN-A- 103 124 404
- CN-A- 103 648 148
- US-A1- 2003 066 881
- US-A1- 2013 316 699
- "3rd Generation Partnership Project; Technical Specification Group Radio Access Network; Evolved Universal Terrestrial Radio Access (E-UTRA); User Equipment (UE) procedures in idle mode (Release 12)", 3GPP STANDARD; 3GPP TS 36.304, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V12.0.0, 16 March 2014 (2014-03-16), pages 1-34, XP050769943,

## Description

### TECHNICAL FIELD

Embodiments of the present invention relate to the communications field, and in particular, to a data processing method of user equipment, and a device.

### BACKGROUND

Currently, in the field of mobile communications technologies, the 2nd generation mobile communications technology (2G) and the 3rd generation mobile communications technology (3G) coexist with the 4th generation mobile communications technology (4G). A carrier runs networks of various different standards simultaneously, and multi-mode user equipment that can support various network standards also appears. For example, multi-mode user equipment can allow a user to access a GSM (Global System for Mobile Communications, Global System for Mobile Communications) network, a UMTS (Universal Mobile Telecommunications System, Universal Mobile Telecommunications System) network, a WCDMA (Wideband Code Division Multiple Access, Wideband Code Division Multiple Access) network, an LTE (Long Term Evolution, Long Term Evolution) network, and the like.

When multi-mode user equipment that can support different network standards registers with a network, the user equipment separately attempts, according to network standards supported by the user equipment, to be registered with the network according to priorities of the network standards. If a network that the user equipment currently attempts to access is an LTE network, but the user equipment has no permission to access the network, the network feeds back a registration rejection message. When receiving the registration rejection message sent by the network side, the user equipment attempts to access a network of another standard.

However, when registering with the network, the user equipment needs to make multiple attempts to trigger a large quantity of signaling interactions, which increases network load, and prolongs network registration time, causing an increase in power consumption of the user equipment.

WO 2014/071774 relates to a method for registering a terminal. US 2013/0316699 relates to UE enhancement for service recovery in mobile communications network. EP 2 146 541 relates to apparatus and method for performing network scanning using black-list network information.

### SUMMARY

In view of this, embodiments of the present invention provide a solution to resolve a problem that network load is increased, and power consumption of the user equipment is increased.

Various aspects of the present disclosure have been defined in the independent claims. Further technical features of each of these aspects have been defined in the respective dependent claims.

In the present invention, when cell reselection measurement is triggered, only an available network corresponding to an available radio technology type is searched for, and no network corresponding to an access prohibited radio technology type of user equipment is searched for; therefore, unnecessary network signaling load is decreased, network search time of the user equipment is decreased, and power consumption of the user equipment is reduced.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG 1 is a schematic diagram of an embodiment of a data processing method of user equipment according to the present invention;
FIG 2 is a schematic diagram of another embodiment of a data processing method of user equipment according to the present invention;
FIG 3 is a schematic diagram of still another embodiment of a data processing method of user equipment according to the present invention;
FIG 4 is a schematic diagram of yet another embodiment of a data processing method of user equipment according to the present invention;
FIG 5 is a schematic diagram of an embodiment of user equipment according to the present invention; and
FIG 6 is a schematic diagram of another embodiment of user equipment according to the present invention.

### DESCRIPTION OF EMBODIMENTS

Currently, in the field of mobile communications technologies, the 2nd generation mobile communications technology (2G) and the 3rd generation mobile communications technology (3G) coexist with the 4th generation mobile communications technology (4G). A carrier runs networks of various different standards simultaneously, and multi-mode user equipment that can support various network standards also appears. For example, multi-mode user equipment can allow a user to access a GSM network, a UMTS network, a WCDMA network, an LTE network, and the like. When multi-mode user equipment that can support different network standards registers with a network, the user equipment attempts, according to network standards supported by the user equipment, to be registered with a network according to priorities of the network standards separately. For example, if the user equipment can allow a user to access a GSM network, a WCDMA network, and an LTE network, a USIM card used by the user can be registered with only a WCDMA network and a GSM network. However, when multi-mode user equipment powers on, if no priority level of a radio access type (Radio Access Type, RAT) is set in the multi-mode user equipment, the equipment first searches for an LTE network, and attempts to be registered with the LTE network. When receiving a network registration rejection message returned by a network side, the user equipment searches for a WCDMA network, and attempts to be registered with the WCDMA network. After accessing the WCDMA network, the user does not attempt to search for and be registered with an LTE network in a current location area again, but still attempts to search for and be registered with an LTE network when crossing areas, which wastes a large quantity of signaling resources, increases network load, and prolongs network registration time, causing an increase in power consumption of the user equipment. In addition, after being rejected to be registered with the network, the user equipment attempts to be registered with a network of another standard. In this case, a data service of another standard cannot be used either, which severely affects data transmission of the user equipment.

In addition, when performing cell reselection measurement in an idle state, the user equipment also measures a cell in a network corresponding to an RAT at a priority level, for example, the equipment measures a cell in an LTE network, but cannot be handed over to the cell in the LTE network during cell handover. Therefore, it is caused that unnecessary cell measurement is performed by the user equipment, power consumption of the user equipment is increased, and network resources are wasted.

To resolve the technical problem existing in the prior art that network load is increased, and power consumption of user equipment is increased, the present invention provides a data processing method of user equipment, and a device, so as to decrease network load and reduce power consumption of the user equipment.

To make a person skilled in the art understand the technical solutions in the present invention better, the following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

### An embodiment

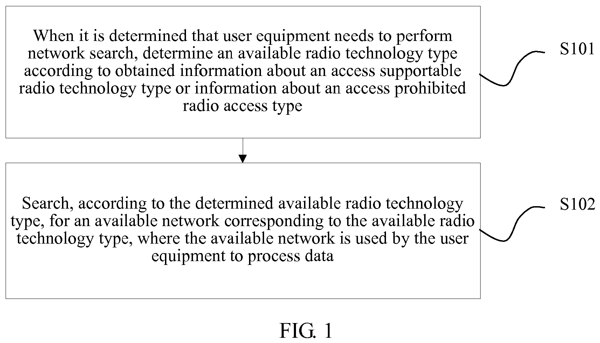

FIG 1 is a schematic diagram of an embodiment of a data processing method of user equipment according to the present invention.

The method shown in FIG 1 is applied to user equipment, where the user equipment may be applied to different communications network systems. The user equipment is multi-mode user equipment, which can support networks corresponding to various radio access technology types (RAT, Radio Access Type). Networks that the user equipment may access include but are not limited to a GSM network, a UMTS network, a CDMA network, a TDCDMA network, a WCDMA network, an SAE/LTE network, and the like.

S101: When it is determined that the user equipment needs to perform network search, determine an available radio technology type according to obtained information about an access supportable radio technology type or information about an access prohibited radio access type.

In a possible implementation manner, the determining that the user equipment needs to perform network search includes: when it is determined that the user equipment registers with a network, determining that the user equipment needs to perform network search. When the user equipment powers on or enters a coverage area from a coverage hole, the user equipment needs to search for a network to perform network registration, and selects a suitable cell to reside. This process is generally referred to as cell selection. When the user equipment is switched from a power-off state to a power-on state, or enters a coverage area from a coverage hole, the user equipment registers with a network. In this case, it is determined that the user equipment needs to perform network search.

In a possible implementation manner, the determining that the user equipment needs to perform network search includes: when it is determined that the user equipment measures a cell, determining that the user equipment needs to perform network search. The determining that the user equipment measures a cell may also include: determining that the user equipment in an idle state performs cell reselection measurement; or, determining that the user equipment in a dedicated connected state measures a cell. The user equipment generally has two states: a connected state (Connected) and an idle state (Idle). When the user equipment is in the dedicated connected state, the user equipment and a network side may perform data transmission between each other, for example, make a call and perform another data service such as surfing the Internet, or sending an SMS message. When the user equipment is in the idle state (Idle), the user equipment performs cell reselection measurement. That is, the user equipment monitors signal quality of a current serving cell of the user equipment and signal quality of a neighboring cell of the user equipment, so as to determine whether to trigger cell reselection, thereby handing over the user equipment from the current serving cell to a reselected cell. When the user equipment in the idle state measures a cell, the user equipment first also performs network search; therefore, when it is determined that the user equipment in the idle state performs cell reselection measurement, it is determined that the user equipment needs to perform network search. When the user equipment is in the dedicated connected state, to ensure that data services are performed normally, the user equipment measures a cell according to a measurement control message delivered by the network side. However, when the user equipment in the dedicated connected state measures a cell, the user equipment first also performs network search; therefore, when it is determined that the user equipment in the dedicated connected state measures a cell, it is determined that the user equipment needs to perform network search.

It should be noted that, several typical application situations in which user equipment needs to perform network search are described above. A person skilled in the art may understand that other scenarios or implementations in which user equipment needs to perform network search may also be applied to the method of the present invention, which are not limited herein. Other implementation manners obtained by a person skilled in the art without creative efforts shall all fall within the protection scope of the present invention.

When it is determined that the user equipment needs to perform network search, information about an access supportable radio technology type or information about an access prohibited radio technology type is obtained. The information about the access supportable radio technology type includes: an access supportable radio technology type of a subscriber identity module of the user equipment and an access supportable radio technology type of the user equipment. The information about the access prohibited radio access type includes: an access prohibited radio technology type of the subscriber identity module of the user equipment and an access prohibited radio technology type of the user equipment. It should be noted that, an access supportable radio technology type of a subscriber identity module of the user equipment may include: for example, information about an access supportable radio technology type of a SIM card and a USIM card (which are not limited herein) of the user equipment. In a possible implementation manner, the access supportable radio technology type of the subscriber identity module of the user equipment may further be a radio technology type corresponding to a network to which the user equipment subscribes from the network side. The access supportable radio technology type of the user equipment may be a radio technology type supported by the user equipment. An example is used for description. If access supportable radio technology types of the user equipment may be GSM, WCDMA, and LTE, and access supportable radio technology types of the subscriber identity module of the user equipment are WCDMA and GSM, it is determined, according to the access supportable radio technology type of the user equipment and the access supportable radio technology type of the subscriber identity module of the user equipment, that access supportable radio technology types are WCDMA and GSM. For another example, if the access supportable radio technology type of the user equipment may be GSM, and the access supportable radio technology type of the subscriber identity module of the user equipment is WCDMA, it is determined that the access supportable radio technology type is GSM. Correspondingly, the access prohibited radio technology type of the subscriber identity module of the user equipment may include: for example, information about an access prohibited radio technology type of a SIM card and a USIM card (which are not limited herein) of the user equipment. The access prohibited radio technology type of the user equipment may be an access unsupported radio technology type of the user equipment, for example, may include: the user equipment can support 3G, the access prohibited radio technology type of the user equipment is LTE, and the subscriber identity module of the user equipment may be, for example, a SIM card that supports 2G and therefore the access prohibited radio technology type of the subscriber identity module of the user equipment is WCDMA, TDCDMA, or LTE. In this case, the determined access prohibited radio technology type may be WCDMA, TDCDMA, or LTE. The foregoing is only an exemplary description, but is not considered as a limitation to the present invention.

In a possible implementation manner, information about an access supportable radio technology type or information about an access prohibited radio technology type is pre-stored in a subscriber identity module of the user equipment. The subscriber identity module may be a SIM card, a USIM card, or another type of module or card that is used to perform subscriber identity identification. The obtaining information about an access supportable radio technology type or information about an access prohibited radio technology type includes obtaining, from the information about the access supportable radio technology type or information about the access prohibited radio technology type that and is pre-saved in the subscriber identity module of the user equipment, the information about the access supportable radio technology type or the information about the access prohibited radio technology type. The information about the access prohibited radio technology type includes an access prohibited radio technology type of the user equipment. For example, an access supportable radio technology type (RAT, Radio Access Technology) of the user equipment includes LTE, WCDMA, GSM or the like. An access prohibited type stored in the SIM card of the user equipment is WCDMA. It should be noted that, after the user equipment reads, from the subscriber identity module, the information about the access supportable radio technology type or the information about the access prohibited radio technology type, the information about the access supportable radio technology type or the information about the access prohibited radio technology type may also be stored in another storage location, for example, saved in an access information database. Then, when the information about the access supportable radio technology type or the information about the access prohibited radio technology type needs to be obtained again, corresponding information may be read directly from the access information database, without the need of reading a SIM card or a USIM card.

In another possible implementation manner, a network side may actively push, to the user equipment, the information about the access supportable radio technology type or the information about the access prohibited radio technology type, and the user equipment receives the information about the access supportable radio technology type or the information about the access prohibited radio technology type that is sent by the network side, and obtains, by using the received information about the access supportable radio technology type or the received information about the access prohibited radio technology type, the information about the access prohibited radio technology type that corresponds to the user equipment. For example, in a possible implementation manner, when user equipment UE registers with a network or establishes a link to a network side, the UE may report information about a radio technology type to the network side, where the information about a radio technology type may include an access supportable radio technology type of a subscriber identity module of the user equipment and/or an access supportable radio technology type of the user equipment. That is, when reporting to the network side, the UE may determine, based on a capability supported by the UE and a capability supported by a SIM, a radio technology type that the UE may access, and then report the radio technology type to the network side. In addition, the network side may further save subscription information corresponding to the UE, so as to determine a radio technology type that may be supported by the UE or an access prohibited radio technology type (for example, the determining is performed by using the subscription information). The network side may save information about a radio technology type corresponding to the UE, and the network side may further actively push the information to the UE. Alternatively, when a request of the UE is received, the information is sent to the network side.

In another possible implementation manner, the user equipment may also request, from the network side, the information about the access supportable radio technology type or the information about the access prohibited radio technology type. During specific implementation, the user equipment sends, to the network side, a request message of the information about the access supportable radio technology type or the information about the access prohibited radio technology type; the user equipment receives a response message fed back by the network side, where the response message includes the information about the access supportable radio technology type or the information about the access prohibited radio technology type; and the user equipment obtains, by using the received response message, the information about the access supportable radio technology type or the information about the access prohibited radio technology type.

In another possible implementation manner, the user equipment may save information about a radio access technology type corresponding to a network with which the network side rejects the user equipment to be registered, as information about an access prohibited radio technology type. When the information about the access prohibited radio technology type that corresponds to the user equipment is obtained, corresponding information is obtained by using the saved information about an access prohibited radio technology type. During specific implementation, when sending a network registration request to a network side device and receiving a network registration rejection message fed back by the network side device, the user equipment saves information about a radio access technology type corresponding to a network in which registration is requested, as information about an access prohibited radio technology type. For example, when the user equipment searches for a network for the first time, when the user equipment does not save the information about the access supportable radio technology type or the information about the access prohibited radio technology type, if the user equipment fails in attempting to be registered with a network and receives a network registration rejection message fed back by the network side device, the user equipment may save information about a radio access technology type corresponding to a network in which registration is requested, as information about an access prohibited radio technology type. For another example, when subscription information of the user equipment is updated or another case in which the information about a radio technology type is updated occurs, an original available network becomes unavailable. In this case, it is also caused that the UE fails in attempting to be registered with a network. In this case, information about a radio access technology type corresponding to a network in which registration is requested is saved as information about an access prohibited radio technology type. The network registration rejection message fed back by the network side device carries identification information, and the identification information is used to indicate that a radio access technology type corresponding to the network in which registration is requested is an access prohibited radio access technology type of the network side.

The foregoing describes four manners for obtaining information about an access prohibited radio technology type that corresponds to the user equipment. A person skilled in the art may understand that the foregoing manners may be used independently, or may be used in combination, which is not limited herein.

S102: Search, according to the determined available radio technology type, for an available network corresponding to the available radio technology type, where the available network is used by the user equipment to process data.

When the user equipment performs network search, an available network corresponding to the available radio technology type is searched for. An example is used for description. If the access supportable radio technology type of the user equipment includes LTE, WCDMA, or GSM, and the access prohibited radio technology type that corresponds to the user equipment is LTE, when the user equipment performs network search, only a WCDMA network and a GSM network are searched for. For another example, information about an access supportable radio technology type and is determined according to an access supportable radio technology type (for example, LTE, WCDMA, or GSM) of the user equipment and an access supportable radio technology type (GSM) of the subscriber identity module of the user equipment is GSM.

In a possible implementation manner, the user equipment may further update the information about the access supportable radio technology type or the information about the access prohibited radio technology type, and determine an available radio technology type according to the updated information about the access supportable radio technology type or the information about the access prohibited radio access type. For example, the following may be included: the when it is determined that user equipment needs to perform network search, determining an available radio technology type according to obtained information about an access supportable radio technology type or information about an access prohibited radio access type is specifically: when it is determined that the user equipment needs to perform network search, updating the information about the access supportable radio technology type or the information about the access prohibited radio access type; and determining an available radio technology type according to the updated information about the access supportable radio technology type or information about the access prohibited radio access type. The updated information about the access supportable radio technology type or updated information about an access prohibited radio access type may be obtained in the following manner: when a network registration message that is input by a user is received, sending a network registration request to a network side device according to the network registration message; and when a network registration success message fed back by the network side device is received and it is determined that pre-saved information about an access prohibited radio technology type includes a radio technology type corresponding to the network in which registration is requested, deleting the information about the access prohibited radio technology type that corresponds to the radio technology type; or, when a network registration success message fed back by the network side device is received and it is determined that pre-saved information about an access supportable radio technology type includes no radio technology type corresponding to the network in which registration is requested, saving the radio technology type as an access supportable radio technology type. In this way, when a user manually chooses to be registered with a network, corresponding information about an access supportable radio technology type or information about an access prohibited radio access type may be updated according to a registration success message or a registration rejection message fed back by the network side. Certainly, a person skilled in the art may understand that, manners for updating information about an access supportable radio technology type or information about an access prohibited radio access type may be flexible and various, for example, may include: receiving the updated information about the access supportable radio technology type or information about the access prohibited radio access type that is sent by the network side; or sending information about a radio technology type update request to the network side, and updating, according to the response message of the network side, the information about the access supportable radio technology type or the information about the access prohibited radio access type. For another example, the information about the access supportable radio technology type or the information about the access prohibited radio access type is updated by using input information of the user or another type of message fed back by the network side, which is not limited in the present invention.

In this embodiment of the present invention, when it is determined that user equipment needs to perform network search, an available radio technology type is determined according to obtained information about an access supportable radio technology type or information about an access prohibited radio access type, and when the user equipment performs network search, a network corresponding to the available radio technology type is searched for, so as to process data by using the network. In the present invention, when a data operation in which network search needs to be performed, such as network registration, is performed, only an available network corresponding to an available radio technology type is searched for, and no network corresponding to an access prohibited radio technology type of user equipment is searched for; therefore, unnecessary network signaling load is decreased, network search time of the user equipment is decreased, and power consumption of the user equipment is reduced.

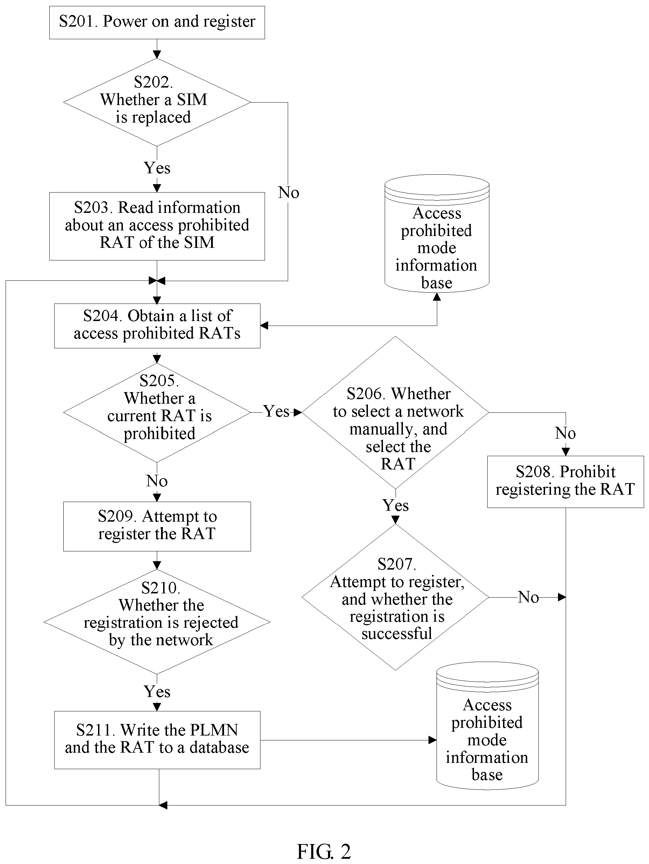

The following describes several specific implementation manners of the method of the present invention with reference to FIG 2 to FIG 4. The following embodiments are all alternations or variations of the method of FIG 1. A person skilled in the art may understand that, the following is only exemplary description, and is not considered as a limitation to the present invention. Other embodiments obtained by making alternations, variations, and combinations to the following embodiments by a person skilled in the art without creative efforts shall also fall within the protection scope of the present invention. It should be noted that, in all the following embodiments, an example in which an available radio technology type is determined according to obtained information about an access prohibited radio access type is used for description. A person skilled in the art may understand that, the method described in the following embodiment may also be applied to a case in which an available radio technology type is determined according to obtained information about an access prohibited radio access type.

### Another embodiment

FIG 2 is a schematic diagram of another embodiment of a data processing method of user equipment according to the present invention.

In this embodiment, an example in which user equipment registers with a network is used to describe the method provided in the present invention.

S201. The user equipment powers on, and enters a network registration mode.

S202. The user equipment determines whether a SIM card is replaced, and if yes, proceed to step S203; or if not, proceed to step S204.

During specific implementation, the user equipment determines, according to an IMSI (international mobile subscriber identification number, International Mobile Subscriber Identification Number) stored in a SIM card, whether the SIM card is changed. The IMSI is an identifier for distinguishing mobile subscribers, and is stored in the SIM card, and may be used to distinguish valid information of a mobile subscriber. When the IMSI is changed, it is determined that the SIM card is replaced. In this case, proceed to step S203, and read information about an access prohibited RAT stored in the SIM.

S203. Read information about an operating RAT and information about an access prohibited RAT that correspond to the IMSI stored in the SIM card.

In this embodiment, information about an operating RAT (that is, RAT that supports access) corresponding to the user equipment and information about an access prohibited RAT are stored in the SIM card. The information about the access prohibited RAT may be shown in the following table:

**Table 1**

| | SIM | ID | Access prohibited RAT | Validity manner | Validity time |
|---|---|---|---|---|---|
| 1 | IMSI1 | PLMN1 | LTE | 0: Permanent validity (unless manual registration is successful 1 (Power on once) 2 (Timer) | Value for validity manner 2 |
| 2 | IMSI1 | PLMN1 | WCDMA | | |
| 3 | IMSI1 | PLMN2 | WCDMA | | |
| ... | | ... | ... | | |
| N | | ... | ... | | |
| N+1 | | ... | ... | | |

In the foregoing table, description information of a prohibited RAT of a PLMN (Public Land Mobile Network, public land mobile network) corresponding to an IMSI of each SIM is stored. A non-PLMN network may also store similar information, that is, information about an access prohibited RAT corresponding to the non-PLMN network.

During specific implementation, validities (that is, valid time or valid type) of the access prohibited RAT may be further set. The valid type of the information about the access prohibited radio technology type includes:
(1) the information about the access prohibited radio technology type is valid all the time; or
(2) the information about the access prohibited radio technology type is invalid after the user equipment powers off; or
(3) the information about the access prohibited radio technology type is valid in a preset time period.

For example, the access prohibited RAT may be set to LTE, or WCDMA. Validities of LTE and WCDMA are both permanent validities, that is, access to the RAT is prohibited all the time unless a user manually registers successfully, and access prohibited information corresponding to the RAT is deleted. The validity of LTE may also set to be invalid after the user equipment powers off. In this way, after the user equipment powers on again, LTE is used as an accessible RAT, and the user equipment attempts to be registered with LTE after power-on. The valid type of WCDMA may also be set to be valid in preset time, and invalid beyond specific time, so that WCDMA may become an accessible standard again, and the user equipment may search for a WCDMA network again when performing network search.

S204. Obtain a list of access prohibited RATs.

For a case of replacing a SIM card, after reading information about an access prohibited RAT from the SIM card, the user equipment stores the information in an access prohibited mode information base. For a case of not replacing the SIM card, the user equipment may directly obtain corresponding information about an access prohibited RAT from the access prohibited mode information base. A correspondence exists between the IMSI of the user equipment and the information about the access prohibited RAT, and the user equipment obtains, by using information about the IMSI of the user equipment, information about an access prohibited RAT corresponding to the user equipment.

S205. Select, according to a priority level, an RAT from an accessible RAT range supported by the user equipment, and determine, according to the list of access prohibited RATs, whether the current RAT is an access prohibited RAT; and if yes, proceed to step S206; or if not, proceed to step S209. S206. Determine whether a user selects a network manually, and select the RAT. If yes, proceed to step S207; or if not, proceed to step S208.

S207. Attempt to search, and register the RAT; and if the registration is successful, delete access prohibited information corresponding to the RAT. If the registration fails, wait for the user to manually select another network; otherwise, go back to step S205.

S208. Prohibit registering the RAT, and go back to step S205.

S209. Attempt to register the RAT, and proceed to step S210.

S210. Determine whether the registration is rejected by the network, and if yes, proceed to step S211.

S211. Write information corresponding to the RAT to the information about the access prohibited RAT, and set a valid type. It is considered by default that the information about the access prohibited RAT is invalid after power-off, or may be configured to be valid permanently, or invalid after a specific Timer times out. Then, proceed to step S205, and reselect a next RAT to attempt to search for a network.

It should be noted that, a source of the information about the access prohibited RAT stored in the user equipment may be from information about an access prohibited RAT pre-saved in a subscriber identity module (such as a SIM card, a UICC card, or a USIM card) of the user equipment, or may be from updated information about an access prohibited RAT sent by a network side, and after receiving the information pushed by the network side, the user equipment updates the information about the access prohibited RAT stored in the user equipment. In another implementation manner, the user equipment may regularly request information about an access prohibited RAT from a network server, and update, by using the requested information, the information about the access prohibited RAT stored in the user equipment. In another possible implementation manner, the user equipment may also update information corresponding to the RAT that the network side rejects to register, to the information about the access prohibited RAT.

In this embodiment, information about an access prohibited RAT corresponding to the user equipment is pre-saved in the subscriber identity module (SIM) of the user equipment, and when the user equipment attempts to perform network registration, only a network corresponding to an RAT except the access prohibited RAT is searched for according to the information about the access prohibited RAT, and no network search and/or network registration is performed on the access prohibited RAT, thereby decreasing signaling interactions performed by the user equipment during network registration, decreasing network load, also decreasing network registration time of a user, and reducing power consumption of the user equipment. In addition, an RAT that a network side rejects to register is updated to the information about the access prohibited RAT, and when the user equipment re-attempts network search (not limited to network registration, and may further include cell reselection, cell measurement or the like), no network search is performed on the RAT that is rejected to be registered, thereby also decreasing network search time of a user, and reducing power consumption of the user equipment.

A person skilled in the art may understand that, in the embodiment shown in FIG 2, an example in which information about an access prohibited RAT is pre-saved in the subscriber identity module (SIM) of the user equipment is used for description. Similarly, when information about an access supportable RAT is pre-saved in the subscriber identity module (SIM) of the user equipment, this method may also be implemented in a similar way. For example, the following may be included: when the user equipment powers on, and enters a network registration mode, if it is determined that the SIM card is replaced, information about an access supportable RAT is read from the SIM card; or if it is determined that the SIM card is not replaced, information about an access supportable RAT is obtained, and then, network search and registration are performed by using the obtained information about the access supportable RAT. When the user fails in manually choosing to perform network registration, and an RAT corresponding to a network in which registration is requested is an access supportable RAT, the information about the RAT is deleted from pre-saved access supportable RATs. When the user manually chooses to perform network registration, and receives a network registration success message fed back by the network side device, and it is determined that the pre-saved information about an access supportable radio technology type includes no radio technology type corresponding to the network in which registration is requested, the radio technology type is saved as an access supportable radio technology type. During specific implementation, implementation may be performed with reference to the embodiment shown in FIG 2.

### Still another embodiment

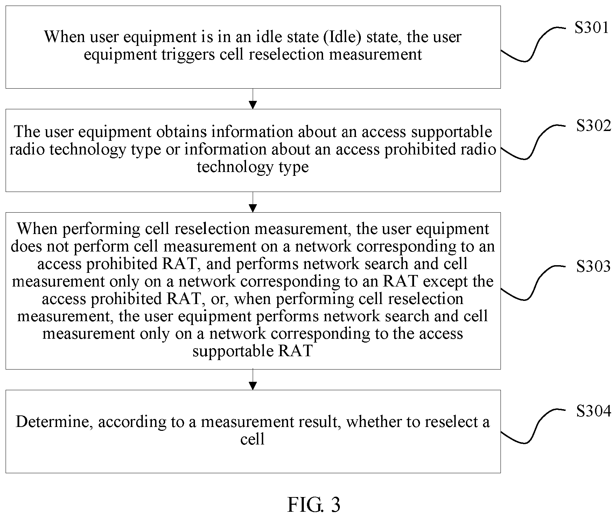

FIG 3 is a schematic diagram of still another embodiment of a data processing method of user equipment according to the present invention.

In this embodiment, an example in which user equipment in an idle state performs cell reselection measurement is used to describe the method provided in the present invention.

S301. When the user equipment is in an idle state, the user equipment triggers cell reselection measurement.

S302. The user equipment obtains information about an access supportable radio technology type or information about an access prohibited radio technology type.

The information about the access supportable radio technology type includes: an access supportable radio technology type of a subscriber identity module of the user equipment and an access supportable radio technology type of the user equipment.

The information about the access prohibited radio access type includes: an access prohibited radio technology type of the subscriber identity module of the user equipment and an access prohibited radio technology type of the user equipment.

S303. When performing cell reselection measurement, the user equipment does not perform cell measurement on a network corresponding to an access prohibited RAT, and performs network search and cell measurement only on a network corresponding to an RAT except the access prohibited RAT, or, when performing cell reselection measurement, the user equipment performs network search and cell measurement only on a network corresponding to the access supportable radio technology type. During specific implementation, to avoid that the user equipment fails to register with a network after cell reselection is performed, no cell measurement is performed on a network corresponding to the access prohibited RAT, or when performing cell reselection measurement, the user equipment performs network search and cell measurement only on a network corresponding to the access supportable radio technology type, so as to reduce network resources consumed by the measurement and power consumption of the user equipment, and improve a registration success rate of the user equipment after cell reselection.

S304. Determine, according to a measurement result, whether to reselect a cell.

Specifically, implementation may be performed according to the method provided in the prior art.

In this embodiment, when user equipment in an Idle state performs cell reselection measurement, the user equipment first acquires information about an access prohibited RAT, then searches, according to the information about the access prohibited RAT, for only a network corresponding to an RAT except the access prohibited RAT, and does not perform network search and/or cell measurement on the access prohibited RAT, thereby decreasing signaling interactions performed when the user equipment measures a cell, decreasing network load, also improving a network registration success rate of the user equipment after cell reselection, and reducing power consumption of the user equipment.

### Yet another embodiment

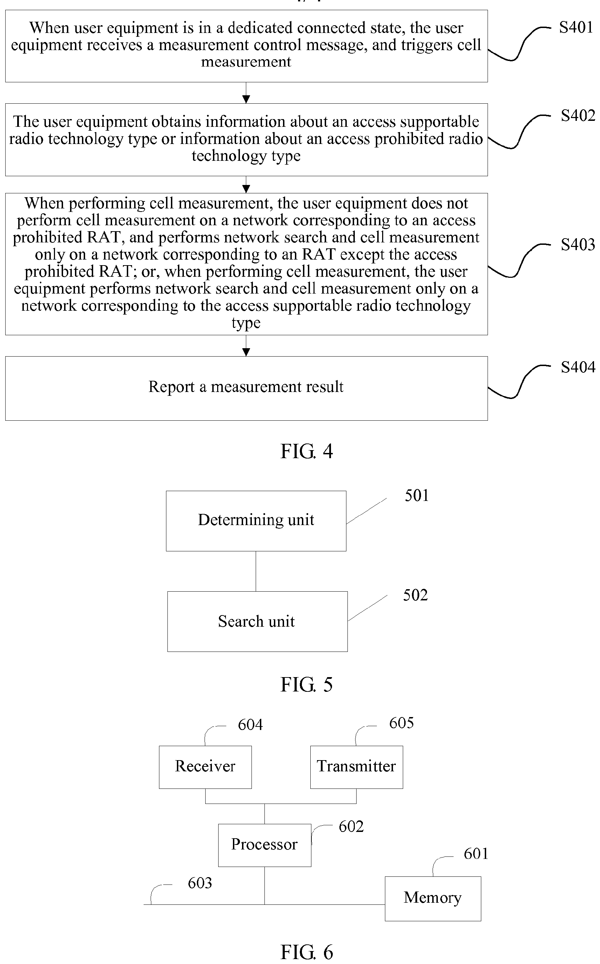

FIG 4 is a schematic diagram of yet another embodiment of a data processing method of user equipment according to the present invention.

In this embodiment, an example in which user equipment in a dedicated connected state measures a cell is used to describe the method provided in the present invention.

S401. When the user equipment is in a dedicated connected state, the user equipment receives a measurement control message, and triggers cell measurement.

When the user equipment is in the dedicated connected state, the user equipment may be in a call mode or a data service mode (for example, Internet surfing, or SMS message). The cell measurement triggered by the user equipment in the dedicated connected state may be triggered after a measurement control message sent by a network side is received, or may be triggered in another triggering manner, which is not limited herein.

S402. The user equipment obtains information about an access supportable radio technology type or information about an access prohibited radio technology type.

S403. When performing cell measurement, the user equipment does not perform cell measurement on a network corresponding to an access prohibited RAT, and performs network search and cell measurement only on a network corresponding to an RAT except the access prohibited RAT; or, when performing cell measurement, the user equipment performs network search and cell measurement only on a network corresponding to the access supportable radio technology type. During specific implementation, to avoid that the user equipment fails to register with a network after cell reselection is performed, no cell measurement is performed on a network corresponding to the access prohibited RAT, or when performing cell measurement, the user equipment performs network search and cell measurement only on a network corresponding to the access supportable radio technology type, so as to reduce network resources consumed by the measurement and power consumption of the user equipment, and improve a registration success rate of the user equipment after cell reselection.

S404. Report a measurement result.

In this embodiment, when user equipment in a dedicated connected state (for example, in a call) measures a cell, the user equipment first acquires information about an access prohibited RAT, then searches, according to the information about the access prohibited RAT, for only a network corresponding to an RAT except the access prohibited RAT, and does not perform network search and/or cell measurement on the access prohibited RAT, thereby decreasing signaling interactions performed when the user equipment measures a cell, decreasing network load, also improving a network registration success rate of the user equipment after cell reselection, and reducing power consumption of the user equipment.

It should be noted that, steps of the foregoing embodiments of the present invention are not necessary but only exemplary descriptions. All other embodiments that may also be obtained from the foregoing embodiments in alteration, variation and combination manners shall fall within the protection scope of the present invention. There is also no definite execution sequence among the steps of the foregoing embodiments of the present invention, and the execution sequence of the foregoing steps may be parallel execution or reversed execution, which is not limited in the present invention.

FIG 5 is a schematic diagram of an embodiment of user equipment according to the present invention. The user equipment shown in FIG 5 is to implement the foregoing methods in the embodiments shown in FIG 1 to FIG 4.

It should be noted that, the user equipment provided in the present invention may be applied to different communications network systems, and the user equipment is multi-mode user equipment, and can support networks corresponding to multiple radio access technology types. Networks that the user equipment may access include, but are not limited to, a GSM network, a UMTS network, a CDMA (Code Division Multiple Access, Code Division Multiple Access) network, a TDCDMA (Time Division-Synchronous Code Division Multiple Access (Time Division-Synchronous Code Division Multiple Access)) network, a WCDMA network, an SAE (System Architecture Evolved, System Architecture Evolution network)/LTE (Long Term Evolved, Long Term Evolution network) network, and the like.

The user equipment includes:
a determining unit 501, configured to: when it is determined that the user equipment needs to perform network search, determine an available radio technology type according to obtained information about an access supportable radio technology type or information about an access prohibited radio access type; and
a search unit 502, configured to search, according to the available radio technology type determined by the determining unit, for an available network corresponding to the available radio technology type, where the available network is used by the user equipment to process data.

The determining unit is specifically configured to: when it is determined that the user equipment registers with a network, determine that the user equipment needs to perform network search; or when it is determined that the user equipment measures a cell, determine that the user equipment needs to perform network search. Further, the determining unit is specifically configured to: when it is determined that user equipment in an idle state performs cell reselection measurement, determine that the user equipment needs to perform network search; or, when it is determined that user equipment in a dedicated connected state measures a cell, determine that the user equipment needs to perform network search.

In a possible implementation manner, the determining unit is specifically configured to: when it is determined that the user equipment registers with a network, determine that the user equipment needs to perform network search. When the user equipment powers on or enters a coverage area from a coverage hole, the user equipment needs to search for a network to perform network registration, and selects a suitable cell to reside. This process is generally referred to as cell selection. When the user equipment is switched from a power-off state to a power-on state, or enters a coverage area from a coverage hole, the user equipment registers with a network. In this case, it is determined that the user equipment needs to perform network search.

In a possible implementation manner, the determining unit is specifically configured to: when it is determined that the user equipment measures a cell, determine that the user equipment needs to perform network search. The determining that the user equipment measures a cell may also include: determining that user equipment in an idle state performs cell reselection measurement; or, determining that user equipment in a dedicated connected state measures a cell. The user equipment generally has two states: a connected state (Connected) and an idle state (Idle). When the user equipment is in the connected state, the user equipment and a network side may perform data transmission between each other, for example, make a call and perform other data services such as surfing the Internet, and sending an SMS message. When the user equipment is in the idle state (Idle), the user equipment performs cell reselection measurement. That is, the user equipment monitors signal quality of a current serving cell of the user equipment and signal quality of a neighboring cell of the user equipment, so as to determine whether to trigger cell reselection, thereby handing over the user equipment from the current serving cell to a reselected cell. When the user equipment in the idle state measures a cell, the user equipment first also performs network search; therefore, when it is determined that the user equipment in the idle state performs cell reselection measurement, it is determined that the user equipment needs to perform network search. When the user equipment is in the dedicated connected state, so as to ensure that data services are performed normally, the user equipment measures a cell according to a measurement control message delivered by the network side. However, when the user equipment in the dedicated connected state measures a cell, the user equipment first also performs network search; therefore, when it is determined that the user equipment in the dedicated connected state measures a cell, it is determined that the user equipment needs to perform network search.

The information about the access supportable radio technology type that is obtained by the determining unit includes:
an access supportable radio technology type of a subscriber identity module of the user equipment and an access supportable radio technology type of the user equipment; and
the information about the access prohibited radio technology type that is obtained by the determining unit includes:
   an access prohibited radio technology type of the subscriber identity module of the user equipment and an access prohibited radio technology type of the user equipment.

The determining unit is specifically configured to: obtain, from information about an access supportable radio technology type or information about an access prohibited radio technology type that is pre-saved in a subscriber identity module of the user equipment, the information about the access supportable radio technology type or the information about the access prohibited radio technology type. In this possible implementation manner, information about an access supportable radio technology type or information about an access prohibited radio technology type is pre-stored in a subscriber identity module of the user equipment. The subscriber identity module may be a SIM card, a USIM card, or another type of module or card that is used to perform subscriber identity identification. The information about the access prohibited radio technology type includes an access prohibited radio technology type of the user equipment. For example, an access supportable radio technology type (RAT, Radio Access Type) of the user equipment includes LTE, WCDMA, GSM or the like. An access prohibited type stored in the SIM card of the user equipment is WCDMA. The obtaining, by the determining unit, information about an access prohibited radio technology type that corresponds to the user equipment includes: obtaining, from information about an access supportable radio technology type or information about an access prohibited radio technology type that is pre-saved in a subscriber identity module of the user equipment, the information about the access supportable radio technology type or the information about the access prohibited radio technology type. It should be noted that, after the user equipment reads, from the subscriber identity module, the information about the access supportable radio technology type or the information about the access prohibited radio technology type, the information about the access supportable radio technology type or the information about the access prohibited radio technology type may also be stored in another storage location, for example, saved in an access information database. Then, when the information about the access supportable radio technology type or the information about the access prohibited radio technology type needs to be obtained again, corresponding information may be read directly from the access information database, without the need of reading a SIM card or a USIM card.

Further, the user equipment further includes: a first receiving unit, configured to receive information about an access supportable radio technology type or information about an access prohibited radio technology type that is sent by a network side; and the determining unit is specifically configured to: obtain, by using the information about the access supportable radio technology type or information about the access prohibited radio technology type that is received by the first receiving unit, the information about the access supportable radio technology type or the information about the access prohibited radio technology type. In this implementation manner, the network side may actively push, to the user equipment, the information about the access supportable radio technology type or the information about the access prohibited radio technology type, the receiving unit of the user equipment receives the information about the access supportable radio technology type or the information about the access prohibited radio technology type that is sent by the network side, and the determining unit of the user equipment obtains, by using the received information about the access supportable radio technology type or the received information about the access prohibited radio technology type, the information about the access supportable radio technology type or the information about the access prohibited radio technology type.

Further, the user equipment further includes: a sending unit, configured to send, to the network side, a request message of the information about the access supportable radio technology type or the information about the access prohibited radio technology type; and, a second receiving unit, configured to receive a response message fed back by the network side, where the response message includes the information about the access supportable radio technology type or the information about the access prohibited radio technology type; and the determining unit is specifically configured to: obtain, by using the response message received by the receiving unit, the information about the access supportable radio technology type or the information about the access prohibited radio technology type.

Further, the determining unit obtains the information about the access supportable radio technology type or the information about the access prohibited radio access type in the following manner:
when the user equipment sends a network registration request to a network side device and receives a network registration rejection message fed back by the network side device, saving information about a radio access technology type corresponding to a network in which registration is requested, as information about an access prohibited radio technology type.

The received network registration rejection message carries identification information, and the identification information is used to indicate that a radio access technology type corresponding to the network in which registration is requested is an access prohibited radio access technology type of the network side.

Further, the determining unit is specifically configured to:
update the information about the access supportable radio technology type or the information about the access prohibited radio access type; and determine an available radio technology type according to the updated information about the access supportable radio technology type or information about the access prohibited radio access type. During specific implementation, the updated information about the access supportable radio technology type or updated information about an access prohibited radio access type may be obtained in the following manner: when a network registration message that is input by a user is received, sending a network registration request to a network side device according to the network registration message; and when a network registration success message fed back by the network side device is received and it is determined that pre-saved information about an access prohibited radio technology type includes a radio technology type corresponding to the network in which registration is requested, deleting the information about the access prohibited radio technology type that corresponds to the radio technology type; or, when a network registration success message fed back by the network side device is received and it is determined that pre-saved information about an access supportable radio technology type includes no radio technology type corresponding to the network in which registration is requested, saving the radio technology type as an access supportable radio technology type. In this way, when a user manually chooses to be registered with a network, corresponding information about an access supportable radio technology type or information about an access prohibited radio access type may be updated according to a registration success message or a registration rejection message fed back by the network side. Certainly, a person skilled in the art may understand that, manners for updating information about an access supportable radio technology type or information about an access prohibited radio access type may be flexible and various, for example, may include: receiving the updated information about the access supportable radio technology type or information about the access prohibited radio access type that is sent by the network side; or sending information about a radio technology type update request to the network side, and updating, according to the response message of the network side, the information about the access supportable radio technology type or the information about the access prohibited radio access type. For another example, the information about the access supportable radio technology type or the information about the access prohibited radio access type is updated by using input information of the user or another type of message fed back by the network side, which is not limited in the present invention.

Further, the user equipment further includes:
a registration information receiving unit, configured to receive network registration message that is input by a user;
a second network registration request sending unit, configured to send a network registration request to a network side device according to the network registration message received by the registration information receiving unit;
a deleting unit, configured to: when the network registration success message fed back by the network side device is received and it is determined that a radio access technology type corresponding to a network in which registration is requested is a pre-saved access prohibited radio access technology type, delete information about the access prohibited radio access technology type that corresponds to the radio access type; and
a saving unit: when the network registration success message fed back by the network side device is received and it is determined that the pre-saved information about an access supportable radio technology type includes no radio technology type corresponding to the network in which registration is requested, save the radio technology type as an access supportable radio technology type.

During specific implementation, when performing network search, a search unit of the user equipment searches for an available network corresponding to an available radio technology type. An example is used for description. If the access supportable radio technology type of the user equipment includes LTE, WCDMA, or GSM, and the access prohibited radio technology type that corresponds to the user equipment is LTE, when the user equipment performs network search, only a WCDMA network and a GSM network are searched for.

In this embodiment of the present invention, when it is determined that user equipment needs to perform network search, an available radio technology type is determined according to obtained information about an access supportable radio technology type or information about an access prohibited radio access type, and when the user equipment performs network search, a network corresponding to the available radio technology type is searched for, so as to process data by using the network. In the present invention, when a data operation in which network search needs to be performed, such as network registration, is performed, only an available network corresponding to an available radio technology type is searched for, and no network corresponding to an access prohibited radio technology type of user equipment is searched for; therefore, unnecessary network signaling load is decreased, network search time of the user equipment is decreased, and power consumption of the user equipment is reduced.

### Another embodiment

FIG 6 is a schematic diagram of another embodiment of user equipment according to the present invention. The user equipment shown in FIG 6 is to implement the foregoing methods in the embodiments shown in FIG 1 to FIG 4.

FIG 6 describes a structure of user equipment provided in another embodiment of the present invention, and the user equipment includes at least one memory 601, a processor 602 (for example, CPU), and at least one communications bus 603 that is configured to implement connection and communication between these apparatuses. The processor 602 is configured to execute an executable module stored in the memory 601, for example, a computer program. The memory 601 may include a high-speed random access memory (RAM: Random Access Memory), and may further include a non-volatile memory (non-volatile memory), such as at least one magnetic disk memory.

In some implementation manners, the memory 601 is configured to: store information about an access supportable radio technology type or information about an access prohibited radio technology type.

The processor 602 is configured to: when it is determined that the user equipment needs to perform network search, obtain, from the memory 601, the information about the access supportable radio technology type or the information about the access prohibited radio technology type; and search, according to the obtained information about the access supportable radio technology type or information about the access prohibited radio technology type, an available network corresponding to the available radio technology type, where the available network is used by the user equipment to process data.

The information about the access supportable radio technology type and is stored in the memory 601 includes: an access supportable radio technology type of a subscriber identity module of the user equipment and an access supportable radio technology type of the user equipment; and the information about the access prohibited radio access type includes: an access prohibited radio technology type of the subscriber identity module of the user equipment and an access prohibited radio technology type of the user equipment.

The processor 602 is further configured to: when it is determined that the user equipment registers with a network, determine that the user equipment needs to perform network search; or when it is determined that the user equipment measures a cell, determine that the user equipment needs to perform network search.

The processor 602 is further configured to: when it is determined that user equipment in an idle state performs cell reselection measurement, determine that the user equipment needs to perform network search; or, when it is determined that user equipment in a dedicated connected state measures a cell, determine that the user equipment needs to perform network search.

The processor 602 is further configured to: obtain, from information about an access supportable radio technology type or information about an access prohibited radio technology type that is pre-saved in a subscriber identity module of the user equipment, the information about the access supportable radio technology type or the information about the access prohibited radio technology type.

The user equipment further includes a receiver 604, configured to receive information about an access supportable radio technology type or information about an access prohibited radio technology type that is sent by a network side; and
the processor 602 is further configured to obtain, by using the information about the access supportable radio technology type or information about the access prohibited radio technology type that is received by the receiver 604, the information about the access supportable radio technology type or the information about the access prohibited radio technology type.

The user equipment further includes a transmitter 605, configured to send, to the network side, a request message of the information about the access supportable radio technology type or the information about the access prohibited radio technology type;
the receiver 604 is further configured to receive a response message fed back by the network side, where the response message includes the information about the access supportable radio technology type or the information about the access prohibited radio technology type; and
the processor 602 is further configured to obtain, by using the received response message, the information about the access supportable radio technology type or the information about the access prohibited radio technology type.

The transmitter 605 is further configured to: after an available network is found by means of search, send a network registration request to a network side device; and
the receiver 604 is further configured to: receive a network registration rejection message fed back by the network side device, where the network registration rejection message carries a rejection cause value, and the rejection cause value is used to indicate that a radio access technology type corresponding to a network in which registration is requested is an access prohibited radio access technology type of the network side.

The processor 602 is further configured to: after the receiver 604 receives the network registration rejection message fed back by the network side device, save information about a radio access technology type corresponding to the network in which registration is requested, as information about an access prohibited radio technology type.

The processor 602 is further configured to: update the information about the access supportable radio technology type or the information about the access prohibited radio access type; and determine an available radio technology type according to the updated information about the access supportable radio technology type or information about the access prohibited radio access type.

The receiver 604 is further configured to receive network registration message that is input by a user;
the transmitter 605 is further configured to: send a network registration request to the network side device according to the network registration message received by the receiver 604;
the receiver 604 is further configured to receive a network registration success message fed back by the network side device; and
the processor is further configured to: when the receiver 604 receives the network registration success message fed back by the network side device and it is determined that a radio access technology type corresponding to the network in which registration is requested is a pre-saved access prohibited radio access technology type, delete information about the access prohibited radio access technology type that corresponds to the radio access type; or, when the receiver 604 receives the network registration success message fed back by the network side device and it is determined that pre-saved information about an access supportable radio technology type includes no radio technology type corresponding to the network in which registration is requested, save the radio technology type as an access supportable radio technology type.

A person of ordinary skill in the art should understand that the procedure of the method according to the embodiments may be implemented by a program instructing relevant hardware. The program may be stored in a readable storage medium. When the program is run, the corresponding steps of the method according to the embodiments of the present invention are performed. The storage medium may be a ROM/RAM, a magnetic disk, an optical disk, and the like.

The foregoing descriptions are merely exemplary implementation manners of the present invention. It should be noted that a person of ordinary skill in the art may make several improvements or polishing without departing from the principle of the present invention and the improvements or polishing shall fall within the protection scope of the present invention, which is solely defined by the appended claims.

## Claims

1. User equipment, wherein the equipment comprises:
a determining unit (501), configured to: when it is determined that user equipment in an idle state, trigger cell reselection measurement and determine an available radio technology type according to obtained information about an access supportable radio technology type or information about an access prohibited radio access type; and
a search unit (502), configured to search, by cell reselection measurement, according to the available radio technology type determined by the determining unit, for an available network corresponding to the available radio technology type, wherein the available network is used by the user equipment to process data;
wherein when performing cell reselection measurement, the user equipment is configured to perform network search and cell measurement only on a network corresponding to the access supportable radio technology type so as to avoid that the user equipment fails to register with a network after cell reselection is performed, and
wherein the user equipment is further configured to determine, according to the measurement result, whether to reselect a cell.

2. The user equipment according to claim 1, wherein the information about the access supportable radio technology type that is obtained by the determining unit comprises:
an access supportable radio technology type of a subscriber identity module of the user equipment and an access supportable radio technology type of the user equipment; and
the information about the access prohibited radio technology type that is obtained by the determining unit comprises:
an access prohibited radio technology type of the subscriber identity module of the user equipment and an access prohibited radio technology type of the user equipment.

3. The user equipment according to claim 1, wherein the determining unit is specifically configured to:
obtain, from information about an access supportable radio technology type or information about an access prohibited radio technology type that is pre-saved in a subscriber identity module of the user equipment, the information about the access supportable radio technology type or the information about the access prohibited radio technology type.

4. The user equipment according to claim 1, wherein the user equipment further comprises:
a first receiving unit, configured to receive information about an access supportable radio technology type or information about an access prohibited radio technology type that is sent by a network side, wherein
the determining unit is specifically configured to:
obtain, by using the information about the access supportable radio technology type or the information about the access prohibited radio technology type that is received by the first receiving unit, the information about the access supportable radio technology type or the information about the access prohibited radio technology type.

5. The user equipment according to claim 1, wherein the user equipment further comprises:
a sending unit, configured to send, to a network side, a request message of information about an access supportable radio technology type or information about an access prohibited radio technology type; and
a second receiving unit, configured to receive a response message fed back by the network side, wherein the response message comprises the information about the access supportable radio technology type or the information about the access prohibited radio technology type, wherein
the determining unit is specifically configured to:
obtain, by using the response message received by the second receiving unit, the information about the access supportable radio technology type or the information about the access prohibited radio technology type.

6. The user equipment according to claim 1, wherein the determining unit is configured to obtain the information about the access supportable radio technology type or the information about the access prohibited radio access type in the following manner:
when the user equipment is configured to send a network registration request to a network side device and to receive a network registration rejection message fed back by the network side device, saving information about a radio access technology type corresponding to a network in which registration is requested, as information about an access prohibited radio technology type.

7. The user equipment according to claim 6, wherein the network registration rejection message carries identification information, and the identification information is used to indicate that a radio access technology type corresponding to the network in which registration is requested is an access prohibited radio access technology type of the network side.

8. The user equipment according to claim 1, wherein the determining unit is specifically configured to:
update the information about the access supportable radio technology type or the information about the access prohibited radio access type; and determine an available radio technology type according to the updated information about the access supportable radio technology type or information about the access prohibited radio access type.

9. A data processing method of user equipment, wherein the method comprises:
when it is determined that user equipment in an idle state, triggering (S301) cell reselection measurement and determining (S302) an available radio technology type according to obtained information about an access supportable radio technology type or information about an access prohibited radio access type; and
searching (S102, S303) according to the determined available radio technology type, for an available network corresponding to the available radio technology type, wherein the available network is used by the user equipment to process data by performing cell reselection measurements;
wherein when performing cell reselection measurement, the user equipment performs network search and cell measurement only on a network corresponding to the access supportable radio technology type so as to avoid that the user equipment fails to register with a network after cell reselection is performed;
determining (304), according to the measurement result, whether to reselect a cell.

10. The method according to claim 9, wherein the obtained information about the access supportable radio technology type comprises:
an access supportable radio technology type of a subscriber identity module of the user equipment and an access supportable radio technology type of the user equipment; and
the obtained information about the access prohibited radio access type comprises:
an access prohibited radio technology type of the subscriber identity module of the user equipment and an access prohibited radio technology type of the user equipment.

11. The method according to claim 9, wherein the obtaining information about an access supportable radio technology type or information about an access prohibited radio technology type comprises:
obtaining, from information about an access supportable radio technology type or information about an access prohibited radio technology type that is pre-saved in a subscriber identity module of the user equipment, the information about the access supportable radio technology type or the information about the access prohibited radio technology type.

12. The method according to claim 9, wherein the method further comprises:
receiving information about an access supportable radio technology type or information about an access prohibited radio technology type that is sent by a network side, wherein
the obtaining information about an access supportable radio technology type or information about an access prohibited radio technology type comprises:
obtaining, by using the received information about the access supportable radio technology type or the received information about the access prohibited radio technology type, the information about the access supportable radio technology type or the information about the access prohibited radio technology type.

13. The method according to claim 9, wherein the method further comprises:
sending, to a network side, a request message of information about an access supportable radio technology type or information about an access prohibited radio technology type; and
receiving a response message fed back by the network side, wherein the response message comprises the information about the access supportable radio technology type or the information about the access prohibited radio technology type, wherein
the obtaining information about an access supportable radio technology type or information about an access prohibited radio technology type comprises:
obtaining, by using the received response message, the information about the access supportable radio technology type or the information about the access prohibited radio technology type.

14. The method according to claim 9, wherein the information about the access supportable radio technology type or the information about the access prohibited radio access type is obtained in the following manner: when the user equipment sends a network registration request to a network side device and receives a network registration rejection message fed back by the network side device, saving information about a radio access technology type corresponding to a network in which registration is requested, as information about an access prohibited radio technology type.

15. The method according to claim 14, wherein the network registration rejection message carries identification information, and the identification information is used to indicate that a radio access technology type corresponding to the network in which registration is requested is an access prohibited radio access technology type of the network side.

16. The method according to claim 9, wherein the determining an available radio technology type according to obtained information about an access supportable radio technology type or information about an access prohibited radio access type comprises:
updating the information about the access supportable radio technology type or the information about the access prohibited radio access type; and determining an available radio technology type according to the updated information about the access supportable radio technology type or information about the access prohibited radio access type.

## Patentansprüche

1. Benutzereinrichtung, wobei die Einrichtung Folgendes umfasst:
eine Bestimmungseinheit (501), die für Folgendes konfiguriert ist: wenn bestimmt wird, dass sich die Benutzereinrichtung in einem Ruhezustand befindet, Auslösen einer Zellneuauswahlmessung und Bestimmen einer verfügbaren Funktechnologieart gemäß erhaltenen Informationen über eine zugriffsfähige Funktechnologieart oder Informationen über eine zugriffsbeschränkte Funkzugriffsart; und
eine Sucheinheit (502), die konfiguriert ist, um, durch Zellneuauswahlmessung, gemäß der verfügbaren Funktechnologieart, die durch die Bestimmungseinheit bestimmt wird, nach einem verfügbaren Netz zu suchen, das der verfügbaren Funktechnologieart entspricht, wobei das verfügbare Netz durch die Benutzereinrichtung verwendet wird, um Daten zu verarbeiten;
wobei die Benutzereinrichtung, wenn sie die Zellneuauswahlmessung durchführt, konfiguriert ist, um eine Netzsuche und eine Zellneuauswahl nur in einem Netz durchzuführen, das der zugriffsfähigen Funktechnologieart entspricht, um zu vermeiden, dass die Benutzereinrichtung scheitert, sich in einem Netz zu registrieren, nachdem die Zellneuauswahl durchgeführt worden ist, und wobei die Benutzereinrichtung ferner konfiguriert ist, um gemäß dem Messergebnis zu bestimmen, ob eine Zelle neu ausgewählt werden soll.

2. Benutzereinrichtung nach Anspruch 1, wobei die Informationen über die zugriffsfähige Funktechnologieart, die durch die Bestimmungseinheit erhalten werden, Folgendes umfassen:
eine zugriffsfähige Funktechnologieart eines Teilnehmeridentitätsmoduls der Benutzereinrichtung und eine zugriffsfähige Funktechnologieart der Benutzereinrichtung; und
wobei die Informationen über die zugriffsbeschränkte Funktechnologieart, die durch die Bestimmungseinheit erhalten werden, Folgendes umfassen:
eine zugriffsbeschränkte Funktechnologieart des Teilnehmeridentitätsmoduls der Benutzereinrichtung und eine zugriffsbeschränkte Funktechnologieart der Benutzereinrichtung.

3. Benutzereinrichtung nach Anspruch 1, wobei die Bestimmungseinheit speziell für Folgendes konfiguriert ist:
Erhalten, von Informationen über eine zugriffsfähige Funktechnologieart oder Informationen über eine zugriffsbeschränkte Funktechnologieart, die in einem Teilnehmeridentitätsmodul der Benutzereinrichtung vorgespeichert sind, der Informationen über die zugriffsfähige Funktechnologieart oder der Informationen über die zugriffsbeschränkte Funktechnologieart.

4. Benutzereinrichtung nach Anspruch 1, wobei die Benutzereinrichtung ferner Folgendes umfasst:
eine erste Empfangseinheit, die konfiguriert ist, um Informationen über eine zugriffsfähige Funktechnologieart oder Informationen über eine zugriffsbeschränkte Funktechnologieart zu empfangen, die durch eine Netzseite gesendet werden, wobei
die Bestimmungseinheit speziell für Folgendes konfiguriert ist:
Erhalten, durch Verwenden der Informationen über die zugriffsfähige Funktechnologieart oder der Informationen über die zugriffsbeschränkte Funktechnologieart, die durch die erste Empfangseinheit empfangen werden, der Informationen über die zugriffsfähige Funktechnologieart oder der Informationen über die zugriffsbeschränkte Funktechnologieart.

5. Benutzereinrichtung nach Anspruch 1, wobei die Benutzereinrichtung ferner Folgendes umfasst:
eine Sendeeinheit, die konfiguriert ist, um eine Anforderungsnachricht von Informationen über eine zugriffsfähige Funktechnologieart oder Informationen über eine zugriffsbeschränkte Funktechnologieart an eine Netzseite zu senden; und
eine zweite Empfangseinheit, die konfiguriert ist, um eine Antwortnachricht, die durch die Netzseite zurückgemeldet wird, zu empfangen, wobei die Antwortnachricht die Informationen über die zugriffsfähige Funktechnologieart oder die Informationen über die zugriffsbeschränkte Funktechnologieart umfasst, wobei
die Bestimmungseinheit speziell für Folgendes konfiguriert ist:
Erhalten, durch Verwenden der Antwortnachricht, die durch die zweite Empfangseinheit empfangen wird, der Informationen über die zugriffsfähige Funktechnologieart oder der Informationen über die zugriffsbeschränkte Funktechnologieart.

6. Benutzereinrichtung nach Anspruch 1, wobei die Bestimmungseinheit konfiguriert ist, um die Informationen über die zugriffsfähige Funktechnologieart oder die Informationen über die zugriffsbeschränkte Funktechnologieart auf die folgende Weise zu erhalten:
wenn die Benutzereinrichtung konfiguriert ist, um eine Netzregistrierungsanforderung an eine Netzseitenvorrichtung zu senden und um eine Netzregistrierungsablehnungsnachricht zu erhalten, die durch die Netzseitenvorrichtung zurückgemeldet wird, Speichern von Informationen über eine Funkzugriffstechnologieart, die einem Netz entspricht, in dem eine Registrierung angefordert wird, als Informationen über eine zugriffsbeschränkte Funktechnologieart.

7. Benutzereinrichtung nach Anspruch 6, wobei die Netzregistrierungsablehnungsnachricht Identifikationsinformationen überträgt und die Identifikationsinformationen verwendet werden, um anzuzeigen, dass eine Funkzugriffstechnologieart, die dem Netz entspricht, in dem die Registrierung angefordert wird, eine zugriffsbeschränkte Funkzugriffstechnologieart der Netzseite ist.

8. Benutzereinrichtung nach Anspruch 1, wobei die Bestimmungseinheit speziell für Folgendes konfiguriert ist:
Aktualisieren der Informationen über die zugriffsfähige Funktechnologieart oder der Informationen über die zugriffsbeschränkte Funkzugriffsart; und Bestimmen einer verfügbaren Funktechnologieart gemäß den aktualisierten Informationen über die zugriffsfähige Funktechnologieart oder den aktualisierten Informationen über die zugriffsbeschränkte Funkzugriffsart.

9. Datenverarbeitungsverfahren der Benutzereinrichtung, wobei das Verfahren Folgendes umfasst:
wenn bestimmt wird, dass die Benutzereinrichtung sich in einem Ruhezustand befindet, Auslösen (S301) der Zellneuauswahlmessung und Bestimmen (S302) einer verfügbaren Funktechnologieart gemäß erhaltener Informationen über eine zugriffsfähige Funktechnologieart oder Informationen über eine zugriffsbeschränkte Funkzugriffsart; und
Suchen (S102, S303), gemäß der bestimmten verfügbaren Funktechnologieart, nach einem verfügbaren Netz, das der verfügbaren Funktechnologieart entspricht, wobei das verfügbare Netz durch die Benutzereinrichtung verwendet wird, um Daten durch Durchführen von Zellneuauswahlmessungen zu verarbeiten;
wobei die Benutzereinrichtung, wenn sie die Zellneuauswahlmessung durchführt, die Netzsuche und die Zellmessung nur in einem Netz durchführt, das der zugriffsfähigen Funktechnologieart entspricht, um zu vermeiden, dass die Benutzereinrichtung scheitert, sich in einem Netz zu registrieren, nachdem der Zellneuauswahl durchgeführt worden ist;
Bestimmen (304), gemäß dem Messergebnis, ob eine Zelle neu ausgewählt werden soll.

10. Verfahren nach Anspruch 9, wobei die erhaltenen Informationen über die zugriffsfähige Funktechnologieart Folgendes umfassen:
eine zugriffsfähige Funktechnologieart eines Teilnehmeridentitätsmoduls der Benutzereinrichtung und eine zugriffsfähige Funktechnologieart der Benutzereinrichtung; und
die erhaltenen Informationen über die zugriffsbeschränkte Funkzugriffsart Folgendes umfassen:
eine zugriffsbeschränkte Funktechnologieart des Teilnehmeridentitätsmoduls der Benutzereinrichtung und eine zugriffsbeschränkte Funktechnologieart der Benutzereinrichtung.

11. Verfahren nach Anspruch 9, wobei das Erhalten von Informationen über eine zugriffsfähige Funktechnologieart oder Informationen über eine zugriffsbeschränkte Funktechnologieart Folgendes umfasst:
Erhalten, von Informationen über eine zugriffsfähige Funktechnologieart oder Informationen über eine zugriffsbeschränkte Funktechnologieart, die in einem Teilnehmeridentitätsmodul der Benutzereinrichtung vorgespeichert sind, der Informationen über die zugriffsfähige Funktechnologieart oder der Informationen über die zugriffsbeschränkte Funktechnologieart.

12. Verfahren nach Anspruch 9, wobei das Verfahren ferner Folgendes umfasst:
Empfangen von Informationen über eine zugriffsfähige Funktechnologieart oder Informationen über eine zugriffsbeschränkte Funktechnologieart, die durch eine Netzseite gesendet werden, wobei
das Erhalten von Informationen über eine zugriffsfähige Funktechnologieart oder Informationen über eine zugriffsbeschränkte Funktechnologieart Folgendes umfasst:
Erhalten, durch Verwenden der empfangenen Informationen über die zugriffsfähige Funktechnologieart oder der empfangenen Informationen über die zugriffsbeschränkte Funktechnologieart, der Informationen über die zugriffsfähige Funktechnologieart oder der Informationen über die zugriffsbeschränke Funktechnologieart.

13. Verfahren nach Anspruch 9, wobei das Verfahren ferner Folgendes umfasst:
Senden einer Anforderungsnachricht von Informationen über eine zugriffsfähige Funktechnologieart oder Informationen über eine zugriffsbeschränkte Funktechnologieart an eine Netzseite; und
Empfangen einer Antwortnachricht, die durch die Netzseite zurückgemeldet wird, wobei die Antwortnachricht die Informationen über die zugriffsfähige Funktechnologieart oder die Informationen über die zugriffsbeschränkte Funktechnologieart umfasst, wobei
das Erhalten von Informationen über eine zugriffsfähige Funktechnologieart oder Informationen über eine zugriffsbeschränkte Funktechnologieart Folgendes umfasst: Erhalten, durch Verwenden der empfangenen Antwortnachricht, der Informationen über die zugriffsfähige Funktechnologieart oder der Informationen über die zugriffsbeschränkte Funktechnologieart.

14. Verfahren nach Anspruch 9, wobei die Informationen über die zugriffsfähige Funktechnologieart oder die Informationen über die zugriffsbeschränkte Funkzugriffsart auf die folgende Weise erhalten werden: wenn die Benutzereinrichtung eine Netzregistrierungsanforderung an eine Netzseitenvorrichtung sendet und eine Netzregistrierungsablehnungsnachricht empfängt, die durch die Netzseitenvorrichtung zurückgemeldet wird, Speichern von Informationen über eine Funkzugriffstechnologieart, die einem Netz entspricht, in dem die Registrierung angefordert wird, als Informationen über eine zugriffsbeschränkte Funktechnologieart.

15. Verfahren nach Anspruch 14, wobei die Netzregistrierungsablehnungsnachricht Identifikationsinformationen überträgt und die Identifikationsinformationen verwendet werden, um anzuzeigen, dass eine Funkzugriffstechnologieart, die dem Netz entspricht, in dem die Registrierung angefordert wird, eine zugriffsbeschränkte Funkzugriffstechnologieart der Netzseite ist.

16. Verfahren nach Anspruch 9, wobei das Bestimmen einer verfügbaren Funktechnologieart gemäß erhaltenen Informationen über eine zugriffsfähige Funktechnologieart oder Informationen über eine zugriffsbeschränkte Funkzugriffsart Folgendes umfasst:
Aktualisieren der Informationen über die zugriffsfähige Funktechnologieart oder der Informationen über die zugriffsbeschränkte Funkzugriffsart; und Bestimmen einer verfügbaren Funktechnologieart gemäß den aktualisierten Informationen über die zugriffsfähige Funktechnologieart oder den aktualisierten Informationen über die zugriffsbeschränkte Funkzugriffsart.

## Revendications

1. Équipement utilisateur, l'équipement comprenant :
une unité de détermination (501), configurée pour: lorsqu'il est déterminé que l'équipement utilisateur est dans un état inactif, déclencher une mesure de resélection de cellule et déterminer un type de technologie radio disponible selon des informations obtenues concernant un type de technologie radio dont l'accès peut être pris en charge ou des informations sur un type d'accès radio dont l'accès est interdit ; et
une unité de recherche (502), configurée pour rechercher, par mesure de resélection de cellule, selon le type de technologie radio disponible
déterminé par l'unité de détermination, un réseau disponible correspondant au type de technologie radio disponible, le réseau disponible étant utilisé par l'équipement utilisateur pour traiter des données ;
dans lequel lors de la réalisation d'une mesure de resélection de cellule, l'équipement utilisateur est configuré pour effectuer la recherche
de réseau et la mesure de cellule uniquement concernant un réseau correspondant au type de technologie radio dont l'accès peut être pris en charge, de manière à éviter que l'équipement utilisateur ne parvienne pas à s'enregistrer auprès d'un réseau après la réalisation de la resélection de cellule, et
dans lequel l'équipement utilisateur est en outre configuré pour déterminer, selon le résultat de la mesure, s'il faut resélectionner une cellule.

2. Équipement utilisateur selon la revendication 1, dans lequel les informations concernant le type de technologie radio dont l'accès peut être pris en charge qui sont obtenues par l'unité de détermination comprennent :
un type de technologie radio l'accès peut être pris en charge d'un module d'identité d'abonné de l'équipement utilisateur et un type de technologie radio dont l'accès peut être pris en charge de l'équipement utilisateur ; et
les informations concernant le type de technologie radio dont l'accès est interdit obtenues par l'unité de détermination comprennent :
un type de technologie radio dont l'accès est interdit du module d'identité d'abonné de l'équipement utilisateur et un type de technologie radio dont l'accès est interdit de l'équipement utilisateur.

3. Équipement utilisateur selon la revendication 1, dans lequel l'unité de détermination est spécifiquement configurée pour :
obtenir, à partir d'informations concernant un type de technologie radio dont l'accès peut être pris en charge ou des informations concernant un type de technologie radio dont l'accès est interdit qui sont préenregistrées dans un module d'identité d'abonné de l'équipement utilisateur, les informations concernant le type de technologie radio dont l'accès peut être pris en charge ou les informations concernant le type de technologie radio dont l'accès est interdit.

4. Équipement utilisateur selon la revendication 1, dans lequel l'équipement utilisateur comprend en outre :
une première unité de réception, configurée pour recevoir des informations concernant un type de technologie radio dont l'accès peut être pris en charge ou des informations concernant un type de technologie radio dont l'accès est interdit qui sont envoyées par un côté réseau, dans lequel
l'unité de détermination est spécifiquement configurée pour :
obtenir, en utilisant les informations concernant le type de technologie radio dont l'accès peut être pris en charge ou les informations concernant le type de technologie radio dont l'accès est interdit qui sont reçues par la première unité de réception, les informations concernant le type de technologie radio dont l'accès peut être pris en charge ou les informations concernant le type de technologie radio dont l'accès est interdit.

5. Équipement utilisateur selon la revendication 1, dans lequel l'équipement utilisateur comprend en outre :
une unité d'envoi, configurée pour envoyer, à un côté réseau, un message de demande d'informations concernant un type de technologie radio dont l'accès peut être pris en charge ou des informations concernant un type de technologie radio dont l'accès est interdit ; et
une seconde unité de réception, configurée pour recevoir un message de réponse renvoyé par le côté réseau, le message de réponse comprenant les informations concernant le type de technologie radio dont l'accès peut être pris en charge ou les informations concernant le type de technologie radio dont l'accès est interdit, dans lequel
l'unité de détermination est spécifiquement configurée pour :
obtenir, en utilisant le message de réponse reçu par la seconde unité de réception, les informations concernant le type de technologie radio dont l'accès peut être pris en charge ou les informations concernant le type de technologie radio dont l'accès est interdit.

6. Équipement utilisateur selon la revendication 1, dans lequel l'unité de détermination est configurée pour obtenir
les informations concernant le type de technologie radio dont l'accès peut être pris en charge ou les informations concernant le type d'accès radio dont l'accès est interdit de la manière suivante :
lorsque l'équipement utilisateur est configuré pour envoyer une demande d'enregistrement de réseau auprès d'un dispositif côté réseau et pour recevoir
un message de rejet d'enregistrement de réseau renvoyé par le dispositif côté réseau, la sauvegarde des informations concernant un type de technologie d'accès radio correspondant à un réseau dans lequel l'enregistrement est demandé, en tant qu'informations concernant un type de technologie radio dont l'accès est interdit.

7. Équipement utilisateur selon la revendication 6, dans lequel le message de rejet d'enregistrement de réseau transporte des informations d'identification, et les informations d'identification sont utilisées pour indiquer qu'un type de technologie d'accès radio correspondant au réseau dans lequel l'enregistrement est demandé est un type de technologie d'accès radio dont l'accès est interdit du côté réseau.

8. Équipement utilisateur selon la revendication 1, dans lequel l'unité de détermination est spécifiquement configurée pour :
mettre à jour les informations concernant le type de technologie radio dont l'accès peut être pris en charge ou les informations concernant le type d'accès radio dont l'accès est interdit ; et déterminer un type de technologie radio disponible selon les informations mises à jour concernant le type de technologie radio dont l'accès peut être pris en charge ou des informations concernant le type d'accès radio dont l'accès est interdit.

9. Procédé de traitement de données d'un équipement utilisateur, dans lequel le procédé comprend :
lorsqu'il est déterminé que l'équipement utilisateur est dans un état inactif, le déclenchement (S301) d'une mesure de resélection de cellule et la détermination (S302) d'un type de technologie radio disponible selon des informations obtenues concernant un type de technologie radio dont l'accès peut être pris en charge ou des informations concernant un type d'accès radio dont l'accès est interdit ; et
la recherche (S102, S303) selon le type de technologie radio disponible déterminé, pour un un réseau disponible correspondant au type de technologie radio disponible, le réseau disponible étant utilisé par l'équipement utilisateur pour traiter des données en effectuant des mesures de resélection de cellule ;
dans lequel, lors de la réalisation d'une mesure de resélection de cellule, l'équipement utilisateur effectue une recherche de réseau et une mesure de cellule uniquement sur un réseau correspondant au type de technologie radio dont l'accès peut être pris en charge, de manière à éviter que l'équipement utilisateur ne parvienne pas à s'enregistrer auprès d'un réseau après la réalisation de la resélection de cellule ;
la détermination (304), selon le résultat de la mesure, du fait de savoir s'il faut resélectionner une cellule.

10. Procédé selon la revendication 9, dans lequel les informations obtenues sur le type de technologie radio dont l'accès peut être pris en charge comprennent :
un type de technologie radio l'accès peut être pris en charge d'un module d'identité d'abonné de l'équipement utilisateur et un type de technologie radio dont l'accès peut être pris en charge de l'équipement utilisateur ; et
les informations obtenues concernant le type d'accès radio dont l'accès est interdit comprennent :
un type de technologie radio dont l'accès est interdit du module d'identité d'abonné de l'équipement utilisateur et un type de technologie radio dont l'accès est interdit de l'équipement utilisateur.

11. Procédé selon la revendication 9, dans lequel l'obtention d'informations concernant un type de technologie radio dont l'accès peut être pris en charge ou des informations concernant un type de technologie radio dont l'accès est interdit comprend :
l'obtention, à partir des informations sur un type de technologie radio dont l'accès peut être pris en charge ou d'informations concernant un type de technologie radio dont l'accès est interdit qui sont préenregistrées dans un module d'identité d'abonné de l'équipement utilisateur, des informations concernant le type de technologie radio dont l'accès peut être pris en charge ou des informations concernant le type de technologie radio dont l'accès est interdit.

12. Procédé selon la revendication 9, dans lequel le procédé comprend en outre :
la réception des informations concernant un type de technologie radio dont l'accès peut être pris en charge ou d'informations concernant un type de technologie radio dont l'accès est interdit qui sont envoyées par un côté réseau, dans lequel
l'obtention des informations concernant un type de technologie radio dont l'accès peut être pris en charge ou des informations concernant un type de technologie radio dont l'accès est interdit comprend :
l'obtention, en utilisant les informations reçues concernant le type de technologie radio dont l'accès peut être pris en charge ou les informations reçues concernant le type de technologie radio dont l'accès est interdit, les informations concernant le type de technologie radio dont l'accès peut être pris en charge ou les informations concernant le type de technologie radio dont l'accès est interdit.

13. Procédé selon la revendication 9, dans lequel le procédé comprend en outre :
l'envoi, vers un côté réseau, d'un message de demande d'informations concernant un type de technologie radio dont l'accès peut être pris en charge ou d'informations concernant un type de technologie radio dont l'accès est interdit ; et
la réception d'un message de réponse renvoyé par le côté réseau, le message de réponse comprenant les informations concernant le type de technologie radio dont l'accès peut être pris en charge ou les informations concernant le type de technologie radio dont l'accès est interdit, dans lequel
l'obtention des informations concernant un type de technologie radio dont l'accès peut être pris en charge ou des informations concernant un type de technologie radio dont l'accès est interdit comprend :
l'obtention, en utilisant le message de réponse reçu, des informations concernant le type de technologie radio dont l'accès peut être pris en charge ou les informations concernant le type de technologie radio dont l'accès est interdit.

14. Procédé selon la revendication 9, dans lequel les informations sur le type de technologie radio dont l'accès peut être pris en charge ou les informations concernant le type d'accès radio dont l'accès est interdit sont obtenues de la manière suivante : lorsque l'équipement utilisateur envoie une demande d'enregistrement de réseau à un dispositif côté réseau et reçoit un message de rejet d'enregistrement de réseau renvoyé par le dispositif côté réseau, la sauvegarde des informations concernant un type de technologie d'accès radio correspondant à un réseau dans lequel l'enregistrement est demandé, en tant qu'informations concernant un type de technologie radio dont l'accès est interdit.

15. Procédé selon la revendication 14, dans lequel le message de rejet d'enregistrement de réseau transporte des informations d'identification, et les informations d'identification sont utilisées pour indiquer qu'un type de technologie d'accès radio correspondant au réseau dans lequel l'enregistrement est demandé est un type de technologie d'accès radio dont l'accès est interdit du côté réseau.

16. Procédé selon la revendication 9, dans lequel la détermination d'un type de technologie radio disponible selon des informations obtenues concernant un type de technologie radio dont l'accès peut être pris en charge ou des informations concernant un type d'accès radio dont l'accès est interdit comprend :
la mise à jour des informations concernant le type de technologie radio dont l'accès peut être pris en charge ou les informations concernant le type d'accès radio dont l'accès est interdit ; et la détermination d'un type de technologie radio disponible selon des informations mises à jour concernant le type de technologie radio dont l'accès peut être pris en charge ou des informations concernant le type d'accès radio dont l'accès est interdit.
